# EUROPÄISCHE PATENTSCHRIFT

(11) **EP 3 377 380 B1**
(45) Veröffentlichungstag und Bekanntmachung des Hinweises auf die Patenterteilung: **23.08.2023**
(21) Anmeldenummer: 16794335.6
(22) Anmeldetag: 10.11.2016
(51) Int. Cl.: B60W 30/18, G08G 1/16, G08G 1/00, B60W 50/00

(54) **AUTOMATISCHE STEUERUNG EINES FAHRZEUGS BEIM ANFAHREN**
AUTOMATIC CONTROLLER OF A VEHICLE DURING STARTING
COMMANDE AUTOMATIQUE D'UN VÉHICULE AU DÉMARRAGE

(30) Priorität: 19.11.2015 DE 102015222805
(43) Veröffentlichungstag der Anmeldung: 26.09.2018
(73) Patentinhaber: Volkswagen Aktiengesellschaft, 38440 Wolfsburg (DE)
(72) Erfinder: KLEINAU, Sandra, 38531 Rötgesbüttel (DE); BUBURUZAN, Teodor, 38118 Braunschweig (DE); LEHMANN, Bernd, 38444 Wolfsburg (DE); RECH, Bernd, 38556 Bokensdorf (DE); ENGEL, Monique, 38110 Braunschweig (DE); GLÄSER, Stefan, 38104 Braunschweig (DE); GÜNTHER, Hendrik-Jörn, 30173 Hannover (DE)
(86) Internationale Anmeldenummer: PCT/EP2016/077305
(87) Internationale Veröffentlichungsnummer: WO 2017/084963

(56) Entgegenhaltungen:
- EP-A1- 2 738 751
- WO-A1-2006/131421
- DE-A1-102008 042 306
- DE-A1-102012 201 982

## Beschreibung

Die vorliegende Erfindung betrifft eine automatische Steuerung eines Fahrzeugs beim Anfahren, insbesondere eine automatische Längsregelung des Fahrzeugs beim Anfahren.

Beim Anfahren einer Fahrzeugschlange an einer Ampel, Kreuzung oder Auffahrt, kann ein sogenannter Ziehharmonika-Effekt beobachtet werden. Bei einem Ziehharmonika-Effekt vergrößern sich die Abstände der Fahrzeuge, insbesondere zwischen den ersten Fahrzeugen, stark. Die Ursache dafür kann ein verzögertes Anfahren aufgrund der Reaktionszeiten der Fahrer sein. Dadurch können weniger Fahrzeuge die Haltelinie der Ampel, die Kreuzung oder Auffahrt passieren, als es prinzipiell möglich wäre. Auch bei Fahrzeugen mit einer automatischen Längsregelung kann ein derartiger Ziehharmonika-Effekt beobachtet werden, da auch die automatischen Längsregelungssysteme gewisse Verzögerungen durch die Analyse des Fahrverhaltens des Vorderfahrzeugs sowie durch das Einhalten allgemein üblicher und komfortabler Abstände zum Vorderfahrzeug einbringen.

In diesem Zusammenhang offenbart die DE 10 2011 009 483 A1 ein Verfahren zum Betrieb eines längsführenden Fahrerassistenzsystems eines Kraftfahrzeugs. Fahren mehrere mit einem längsführenden Fahrerassistenzsystem ausgestattete Kraftfahrzeuge in einer Kolonne hintereinander her, kann es insbesondere im niedrigen Geschwindigkeitsbereich zu Problemen kommen. Insbesondere bei einem sogenannten Stopp-and-Go-Betrieb kann es im Falle einer Längsführungskolonnenfahrt zu einem "Schwingen" der Regelung kommen, sodass eine Art Ziehharmonika-Effekt und damit eine ineffiziente Fahrweise mit starken Beschleunigungen und starken Abbremsungen auftreten kann. Ursachen für diese ungewünschten Effekte liegen beispielsweise in den Verzugszeiten der Sensorik und der Aktuatorik und in den Zeitkonstanten der Längsführung. Verzüge im Sensorbereich basieren meistens auf der Art der Auswertung, wenn beispielsweise Daten plausibilisiert werden oder anderweitig der Sicherheit der Detektion zuträgliche Schwellen überwunden werden müssen. Die Zeitkonstanten der Längsregelung eines längsführenden Fahrerassistenzsystems werden vor allem unter dem Gesichtspunkt des Fahrkomforts im Hinblick auf übliche und häufige Verkehrssituationen parametriert. Zur Lösung dieses Problems wird daher vorgeschlagen, die spezielle Situation einer Kolonne bestehend aus mindestens drei Fahrzeugen mit aktiv betriebenen längsführenden Fahrerassistenzsystemen zu erkennen. Durch eine geeignete situationsangepasste Umparametrierung der Längsregelung, Sensorik und/oder Aktuatorik wird dafür gesorgt, dass die spezielle Situation der Kolonnenfahrt beherrscht wird. In einer Ausgestaltung ist vorgesehen, dass ein Kolonnenwert letztendlich eine binäre Aussage darüber enthält, ob in einer Längsführungs-Kolonne gefahren wird oder nicht. Bei einer festgestellten Längsführungs-Kolonnenfahrt wird ein Betriebsparameter zur Reduzierung einer Reaktionszeit des Fahrerassistenzsystems auf das Verhalten des dem Kraftfahrzeug unmittelbar vorausfahrenden Kraftfahrzeugs angepasst. Dadurch, dass das Fahrerassistenzsystem schneller reagieren kann, wird ein Aufschaukeln bzw. Aufsummieren von Reaktionszeitdauern vermieden. Es sind verschiedene Ansätze denkbar, um das Vorliegen einer Längsführungs-Kolonnenfahrt zu detektieren. Beispielsweise kann die relative Bewegung zweier voranfahrender Kraftfahrzeuge und des eigenen Kraftfahrzeugs beschreibende Dynamikdaten ausgewertet werden. Ferner können über Car-to-Car-Systeme oder Car-to-X-Systeme weitergehende Informationen über Kraftfahrzeuge mit einem aktiven längsführenden Fahrerassistenzsystem in der Umgebung des eigenen Fahrzeugs gesammelt werden.

Ein Ziehharmonika-Effekt kann zwar nach Erkennen einer Kolonnenfahrt durch Ändern von Parametern der eigenen automatischen Längsführung verringert werden, insbesondere bei längeren Kolonnen können sich jedoch auch geänderte Parameter wieder aufschaukeln, sodass in diesem Fall der Ziehharmonika-Effekt wieder auftreten kann. Ferner sind dem Verringern von Verzugszeiten und Zeitkonstanten sowie Reaktionszeitdauern insbesondere beim Anfahren Grenzen gesetzt, da Verzüge im Sensorbereich durch die Auswertung und Plausibilisierung unvermeidbar sind.

Ferner ist aus der EP 2 738 751 A1 ein Fahrzeugsteuersystem bekannt, welches verschiedene Informationen zwischen einem eigenen Fahrzeug und einem anderen Fahrzeug, beispielsweise einem vorhergehenden Fahrzeug oder einem nachfolgenden Fahrzeug, sendet und empfängt. Die Informationen können eine Geschwindigkeitsinformation, eine Beschleunigungsinformation und/oder eine Beschleunigungsanforderungswertinformation umfassen. Eine Fahrzeugsteuereinheit weist eine Funktion eines autonomen Steuerns eines Abstands zwischen dem eigenen Fahrzeug und dem anderen Fahrzeug auf der Grundlage dieser Informationen auf.

Die WO 2006/131421 A1 betrifft einen adaptiven Geschwindigkeitsregler mit situationsabhängiger Dynamikanpassung mit einer Erkennungseinrichtung zur Erkennung verschiedener vorgegebener Kategorien von Kolonnenfahrtsituationen und zur Auswahl eines an die erkannte Situation angepassten Dynamikprofils. Bei einem Stau oder bei zähflüssigem Verkehr empfiehlt sich ein Profil mit geringer Dynamik. Demgegenüber ist beim Anfahren aus einer Warteschlange vor einer Ampel oder Kreuzung eher ein dynamischeres Profil angemessen.

Aufgabe der vorliegenden Erfindung ist es daher, ein Verfahren für eine automatische Steuerung eines Fahrzeugs beim Anfahren bereitzustellen, welches das Folgeverhalten der Fahrzeuge verbessert und dadurch den Fahrzeugdurchsatz an beispielsweise einer Einmündung, Kreuzung oder Ampel erhöht. Durch die Erhöhung des Fahrzeugdurchsatzes können ein Kraftstoffverbrauch und Schadstoffemissionen der Fahrzeuge verringert werden.

Diese Aufgabe wird durch ein Verfahren für eine teilautomatisierte oder automatische Steuerung eines Fahrzeugs beim Anfahren nach Anspruch 1, ein Verfahren für eine teilautomatisierte oder automatische Steuerung eines Fahrzeugs beim Anfahren nach Anspruch 6, eine Vorrichtung zum Ansteuern einer teilautomatisierten oder automatischen Steuerung eines Fahrzeugs nach Anspruch 8 und eine Vorrichtung zum Ansteuern einer teilautomatisierten oder automatischen Steuerung eines Fahrzeugs beim Anfahren nach Anspruch 9 gelöst. Die abhängigen Ansprüche definieren Ausführungsformen der Erfindung.

Gemäß der vorliegenden Erfindung wird ein Verfahren für eine teilautomatisierte oder automatische Steuerung eines Fahrzeugs beim Anfahren bereitgestellt. Die teilautomatisierte Steuerung des Fahrzeugs kann beispielsweise eine automatische Längssteuerung des Fahrzeugs umfassen. Mittels der automatischen Längssteuerung des Fahrzeugs kann ein Anfahrvorgang des Fahrzeugs automatisch eingeleitet werden, das Fahrzeug automatisch beschleunigt oder abgebremst werden und/oder das Fahrzeug automatisch bis zum Stillstand gebracht werden. Die automatische Steuerung kann darüber hinaus eine Quersteuerung des Fahrzeugs umfassen, bei welcher ein Lenkwinkel des Fahrzeugs automatisch eingestellt wird. Bei dem Verfahren wird eine Fahrintensionsnachricht von einem weiteren Fahrzeug empfangen. Eine Fahrintensionsnachricht ist eine Nachricht mit einer Information über einen geplanten Anfahr- oder Fahrvorgang des weiteren Fahrzeugs. Die Fahrintentionsnachricht kann beispielsweise eine digitale Nachricht umfassen, in welcher Informationen über einen zukünftigen geplanten Anfahr- und/oder Fahrvorgang des weiteren Fahrzeugs enthalten sind. Weiterhin wird bei dem Verfahren bestimmt, ob sich das weitere Fahrzeug direkt vor dem Fahrzeug befindet. Direkt vor dem Fahrzeug bedeutet in diesem Zusammenhang beispielsweise, dass sich zwischen dem Fahrzeug und dem weiteren Fahrzeug kein anderes Fahrzeug befindet. Im Stillstand des Fahrzeugs und des weiteren Fahrzeugs kann ein Abstand zwischen dem Fahrzeug und dem weiteren Fahrzeug beispielsweise im Bereich von wenigen Zentimetern bis zu einigen Metern, beispielsweise bis zu 5 m, sein. In Abhängigkeit von der von dem weiteren Fahrzeug empfangenen Fahrintensionsnachricht wird ein Parameter für die automatische Steuerung des Fahrzeugs bestimmt, wenn festgestellt wurde, dass sich das weitere Fahrzeug direkt vor dem Fahrzeug befindet. Anders ausgedrückt wird der Parameter für die automatische Steuerung des Fahrzeugs nur in Abhängigkeit von einer Fahrintensionsnachricht bestimmt, welche von einem direkt vorausfahrenden Fahrzeug stammt. Indem das beabsichtigte Fahrverhalten des vorausfahrenden Fahrzeugs bekannt ist, kann das Anfahrverhalten des Fahrzeugs optimal an das direkt vorausfahrende Fahrzeug angepasst eingestellt werden und Regelverzögerungen können vermieden werden. Dadurch wird ein Aufschaukeln von Verzögerungen verringert und ein Ziehharmonika-Effekt kann vermieden werden.

Das Empfangen der Fahrintensionsnachricht kann eine Datenübertragung mittels einer Fahrzeug-zu-Fahrzeug-Kommunikation zwischen dem Fahrzeug und dem weiteren Fahrzeug umfassen. Die Fahrzeug-zu-Fahrzeug-Kommunikation wird auch als Car-to-Car-Kommunikation (C2C) oder Vehicle-to-Vehicle-Kommunikation (V2V) bezeichnet. Die Fahrzeug-zu-Fahrzeug-Kommunikation kann in dem Fahrzeug für verschiedene Aufgaben, beispielsweise Fahrerassistenzsysteme, vorhanden sein und kann eine schnelle echtzeitfähige Datenübertragung bereitstellen. Dadurch stehen dem Fahrzeug aktuelle Fahrintensionsnachrichten von anderen Fahrzeugen ohne zusätzlichen Aufwand zur Verfügung.

Die Fahrintentionsnachricht kann in Weiterbildung zusätzlich verschiedene Informationen umfassen, welche von dem Fahrzeug zum Steuern des Anfahrens ausgewertet werden können. Gemäß einer Ausführungsform umfasst die Fahrintensionsnachricht eine Positionsinformation einer aktuellen Position des weiteren Fahrzeugs. Die aktuelle Position des weiteren Fahrzeugs zeigt somit die Ausgangsposition für einen zukünftigen Anfahrvorgang an. Ferner kann die aktuelle Position des weiteren Fahrzeugs verwendet werden, um anhand der aktuellen Position des eigenen Fahrzeugs zu bestimmen, ob das weitere Fahrzeug sich direkt vor dem Fahrzeug befindet. Alternativ oder zusätzlich umfasst die Fahrintensionsnachricht einen geplanten Startzeitpunkt zum Starten eines Antriebsmotors des weiteren Fahrzeugs. Dies ermöglicht dem Fahrzeug, den eigenen Antriebsmotor rechtzeitig zu starten, aber dennoch zuvor möglichst lange abgeschaltet zu lassen. Dadurch können ein Verschleiß und ein Kraftstoffverbrauch des Fahrzeugs verringert werden.

Alternativ oder zusätzlich umfasst die Fahrintensionsnachricht einen geplanten Beschleunigungsverlauf, einen geplanten Geschwindigkeitsverlauf und/oder einen geplanten Ortsverlauf des weiteren Fahrzeugs. Der Ortsverlauf kann beispielsweise eine Folge von Weg-Zeit-Punkten umfassen. Anhand einer oder mehrerer dieser Informationen kann das Fahrzeug beispielsweise unter Berücksichtigung eigener Fahrleistungen den eigenen Anfahrverlauf bestimmen und umsetzen. Da die Planung des eigenen Anfahrvorgangs vorab, also zeitlich vor dem Losfahren des Fahrzeugs, durchgeführt werden kann, können Verzugszeiten durch Regelvorgänge vermieden werden und somit ein Ziehharmonika-Effekt verringert oder vermieden werden.

Die Fahrintensionsnachricht umfasst erfindungsgemäß einen geplanten Anfahrzeitpunkt des weiteren Fahrzeugs Dadurch wird dem Fahrzeug ermöglicht, einen Startzeitpunkt für den eigenen Anfahrverlauf zu bestimmen und Vorbereitungen rechtzeitig zu treffen. Die Vorbereitungen betreffen beispielsweise ein Lösen einer Bremse des Fahrzeugs, ein Bereitstellen eines ausreichendes Drehmoments am Fahrzeugmotor und/oder eine Vorbereitung einer Kupplung des Fahrzeugs für den Anfahrvorgang. Ferner kann der geplante Anfahrzeitpunkt einem Fahrer des Fahrzeugs angezeigt werden, sodass der Fahrer nicht von einem plötzlichen unerwarteten Verhalten seines Fahrzeugs überrascht wird.

Der Parameter für die automatische Steuerung des Fahrzeugs kann beispielsweise einen zwischen dem Fahrzeug und dem weiteren Fahrzeug einzuhaltenden Abstand betreffen. Insbesondere kann beispielsweise während eines Anfahrvorgangs der Abstand zwischen dem Fahrzeug und dem weiteren Fahrzeug unter Berücksichtigung gesetzlich vorgeschriebener Mindestabstände verhältnismäßig gering gehalten werden, ohne dass dies von einem Fahrer des Fahrzeugs als unangenehm erachtet wird. Dadurch kann das Fahrzeug dem weiteren Fahrzeug zügig folgen. Weiterhin kann der Abstand zwischen dem Fahrzeug und dem weiteren Fahrzeug rechtzeitig vergrößert werden, wenn aus der Fahrintensionsnachricht des weiteren Fahrzeugs ersichtlich ist, dass beispielsweise aufgrund eines Schaltvorgangs die Beschleunigung des weiteren Fahrzeugs zumindest kurzzeitig ausgesetzt wird. Durch rechtzeitiges Vergrößern des einzuhaltenden Abstands kann bei dem eigenen Fahrzeug eine gleichmäßige Beschleunigung eingestellt werden, sodass ein Ziehharmonika-Effekt verringert werden kann und aufgrund des geringen Abstands eine große Anzahl von Fahrzeugen beispielsweise eine Kreuzung oder eine Ampel passieren können.

Alternativ oder zusätzlich umfasst der Parameter für die automatische Steuerung des Fahrzeugs einen geplanten Startzeitpunkt zum Starten eines Antriebsmotors des Fahrzeugs.

Anhand von beispielsweise einem geplanten Anfahrzeitpunkt des weiteren Fahrzeugs, welcher über die Fahrintensionsnachricht übermittelt wurde, kann das Fahrzeug unter Berücksichtigung einer üblichen Dauer zum Starten des Antriebsmotors einen günstigen Startzeitpunkt zum Starten des Antriebsmotors auswählen. Dadurch kann sichergestellt werden, dass das Fahrzeug rechtzeitig betriebsbereit ist, um einen Ziehharmonika-Effekt beim Anfahren in einer Kolonne zu vermeiden. Trotzdem kann so der Antriebsmotor zu einem möglichst späten Zeitpunkt gestartet werden, um einen Kraftstoffverbrauch und Emissionen des Fahrzeugs zu verringern.

Alternativ oder zusätzlich umfasst der Parameter für die automatische Steuerung des Fahrzeugs einen geplanten Beschleunigungsverlauf des Fahrzeugs, einen geplanten Geschwindigkeitsverlauf des Fahrzeugs und/oder einen geplanten Ortsverlauf des Fahrzeugs. Anders ausgedrückt wird eine Trajektorie des Fahrzeugs geplant und die automatische Steuerung gemäß der geplanten Trajektorie eingestellt. Dabei können Eigenschaften des Fahrzeugs, wie zum Beispiel eine Beladung des Fahrzeugs oder eine Leistungsfähigkeit des Fahrzeugantriebs sowie Schaltpunkte für einen Gangwechsel berücksichtigt werden. Ferner kann der Parameter für die automatische Steuerung des Fahrzeugs einen geplanten Anfahrzeitpunkt des Fahrzeugs umfassen. Die automatische Steuerung kann den geplanten Anfahrzeitpunkt verwenden, um beispielsweise Vorbereitungen zum Anfahren des Fahrzeugs zu treffen, beispielsweise einen Gang in einem Getriebe des Fahrzeugs einlegen und/oder einen Bremsdruck eines Bremssystems des Fahrzeugs verringern.

Um zu bestimmen, ob sich das weitere Fahrzeug direkt vor dem Fahrzeug befindet, wird bei einer Ausführungsform des Verfahrens eine Fahrstreifeninformation bestimmt, welche eine Belegung des Fahrstreifens vor dem Fahrzeug anzeigt. Die Fahrstreifeninformation kann beispielsweise mit optischen Erfassungsmitteln, beispielsweise einer Frontkamera, erfasst werden. In der Fahrintensionsnachricht kann beispielsweise ein Fahrzeugidentifikationskennzeichen, beispielswiese das Fahrzeugkennzeichen, übermittelt werden. Das Fahrzeugkennzeichen kann mit einem Fahrzeugkennzeichen eines Fahrzeugs vor dem Fahrzeug aus der Fahrstreifeninformation verglichen werden und somit kann bestimmt werden, ob sich das weitere Fahrzeug direkt vor dem Fahrzeug befindet. Alternativ oder zusätzlich kann eine aktuelle Position des Fahrzeugs mit einer aktuellen Position des weiteren Fahrzeugs verglichen werden, um zu bestimmen, ob sich das weitere Fahrzeug direkt vor dem Fahrzeug befindet. Die aktuelle Position des Fahrzeugs kann beispielsweise mit einem globalen Positionsbestimmungssystem (GPS) ermittelt werden. Die aktuelle Position des weiteren Fahrzeugs kann beispielsweise über die Fahrintensionsnachricht von dem weiteren Fahrzeug zu dem Fahrzeug übertragen werden.

Um Folgefahrzeugen ein zügiges Anfahren ohne Ziehharmonikaeffekt zu ermögliche, umfasst das Verfahren bei einer weiteren Ausführungsform ferner ein Erzeugen einer weiteren Fahrintensionsnachricht in Abhängigkeit von dem Parameter für die automatische Steuerung. Die weitere Fahrintensionsnachricht zeigt eine Information über einen geplanten Anfahrvorgang des Fahrzeugs an und wird über eine Fahrzeug-zu-Fahrzeug-Kommunikation ausgesendet. Anders ausgedrückt kann das Fahrzeug, welches wie zuvor beschrieben die Parameter für die automatische Steuerung anhand von Fahrintentionsabsichten eines vorausfahrenden Fahrzeugs bestimmt hat, daraus einen eigenen Anfahrvorgang ermitteln und in einer weiteren Fahrintensionsnachricht für beispielsweise ein nachfolgendes Fahrzeug aussenden. Somit können mehrere Fahrzeuge, welche das zuvor beschriebene Verfahren verwenden, ihren jeweiligen geplanten Anfahrvorgang an den geplanten Anfahrvorgang des Vorderfahrzeugs anpassen. Da die gesamte Planung der Anfahrvorgänge im Vorfeld vor dem eigentlichen Anfahren stattfinden kann, können Regelungsverzögerungen vermieden werden und somit ein Ziehharmonika-Effekt beim Anfahren verringert werden. Dadurch können beispielsweise beim Anfahren an einer Ampel während einer Grünphase viele Fahrzeuge die Ampel zügig passieren. Da die geplanten Anfahrvorgänge im Vorfeld von Fahrzeug zu Fahrzeug übertragen werden, sind nur einfache Kommunikationsstrukturen vom Fahrzeug zum Vorderfahrzeug und/oder Hinterfahrzeug erforderlich. Darüber hinaus ist keine bidirektionale Kommunikation zwischen Fahrzeugen erforderlich, sondern es genügt, wenn ein jeweiliges Fahrzeug seinen geplanten Anfahrvorgang über eine entsprechende Fahrintensionsnachricht als sogenannte Rundumnachricht oder Broadcast-Nachricht aussendet. Dadurch kann der benötigte Informationsaustausch auf einfache Art und Weise sichergestellt werden.

Ferner umfasst das Verfahren ein Empfangen einer Lichtzeichennachricht von einer Lichtzeichenanlage und ein Bestimmen des Parameters für die automatische Steuerung des Fahrzeugs in Abhängigkeit von der von der Lichtzeichenanlage empfangenen Lichtzeichennachricht. Die Lichtzeichennachricht umfasst eine Zeitinformation über eine Lichtzeichenphase der Lichtzeichenanlage und alternativ oder zusätzlich eine Ortsinformation zu einem Standort der Lichtzeichenanlage oder eine Topologie einer Kreuzung (wie z.B. Fahrspurenverlauf und -anzahl). Die Zeitinformation über die Lichtzeichenphase kann z.B. einen Start- und Endzeitpunkt einer Grünphase der Lichtzeichenanlage umfassen. Das Fahrzeug befindet sich beispielsweise wie zuvor beschrieben in einer Fahrzeugschlange und nähert sich der Lichtzeichenanlage an. Anhand der Zeitinformationen über die Lichtzeichenphase der Lichtzeichenanlage, der Ortsinformation der Lichtzeichenanlage und ggf. der Topologie der Kreuzung sowie der für das Fahrzeug geplanten automatischen Steuerung kann das Fahrzeug bestimmen, ob das Fahrzeug die Lichtzeichenanlage während der nächsten Grünphase passieren können wird. Falls ein Passieren der Lichtzeichenanlage während der nächsten Grünphase möglich ist, folgt das Fahrzeug seinem Vorderfahrzeug mit den Parametern für die automatische Steuerung, wie sie zuvor unter Berücksichtigung des geplanten Anfahrvorgangs des Vorderfahrzeugs bestimmt wurden.

Für den Fall, dass das Fahrzeug die Lichtzeichenanlage voraussichtlich während der nächsten Grünphase nicht passieren wird, können die Parameter für die automatische Steuerung derart bestimmt werden, dass das Fahrzeug möglichst energieeffizient vor der Lichtzeichenanlage in der Kolonne zum Stehen kommt.

Gemäß der vorliegenden Erfindung wird ein weiteres Verfahren für eine teilautomatisierte oder automatische Steuerung eines Fahrzeugs beim Anfahren bereitgestellt. Das Verfahren umfasst das Erfassen einer Umgebungsinformation vor dem Fahrzeug und ein Bestimmen eines Parameters für die automatische Steuerung des Fahrzeugs beim Anfahren in Abhängigkeit von der erfassten Umgebungsinformation. Ferner wird bei dem Verfahren in Abhängigkeit von dem Parameter für die automatische Steuerung eine Fahrintentionsnachricht erzeugt. Die Fahrintentionsnachricht zeigt eine Information über den geplanten Anfahrzeitpunkt des Fahrzeugs an. Die Fahrintentionsnachricht wird über eine Fahrzeug-zu-Fahrzeug-Kommunikation ausgesendet. Dieses Verfahren ist beispielsweise in Situationen verwendbar, in denen das Fahrzeug sich am Kopf einer Fahrzeugkolonne befindet oder hinter einem Fahrzeug fährt, welches keine Fahrintentionsnachrichten aussendet. Das Fahrzeug parametriert daher seine automatische Steuerung, insbesondere seine Längssteuerung, anhand der erfassten Umgebungsinformation vor dem Fahrzeug. Um einen Ziehharmonika-Effekt bei nachfolgenden Fahrzeugen zu vermeiden, erzeugt das Fahrzeug eine seinen geplanten Anfahrvorgang anzeigende Fahrintentionsnachricht und sendet diese Fahrintentionsnachricht aus, sodass sie von anderen Fahrzeugen empfangen werden kann. Ein Folgefahrzeug kann seinerseits seine Parameter für die automatische Steuerung des Fahrzeugs in Abhängigkeit von der von dem Fahrzeug empfangenen Fahrintentionsnachricht einstellen. Dadurch kann ein Ziehharmonika-Effekt der nachfolgenden Fahrzeuge wirksam verringert werden, wodurch ein Kraftstoffverbrauch der nachfolgenden Fahrzeuge verringert werden kann und ein Gesamtdurchsatz von Fahrzeugen an beispielsweise einer Ampel erhöht werden kann.

Das Erfassen der Umgebungsinformation umfasst ein Empfangen einer Lichtzeichennachricht von einer Lichtzeichenanlage. Der Parameter für die automatische Steuerung des Fahrzeugs wird in Abhängigkeit von der von der Lichtzeichenanlage empfangenen Lichtzeichennachricht bestimmt. Die Lichtzeichennachricht kann beispielsweise anzeigen, wann eine Grünphase beginnt. Diese Information kann das Fahrzeug verwenden, um einen Anfahrvorgang zu parametrieren und einen sich daraus ergebenden geplanten Anfahrvorgang mit Hilfe einer Fahrintentionsnachricht an ein Folgefahrzeug senden. Dadurch können Verzögerungen beim Anfahren an einer Lichtzeichenanlage vermieden werden.

Bei einer weiteren Ausführungsform umfasst das Erfassen der Umgebungsinformation ein Erfassen einer Verkehrssituation vor dem Fahrzeug. Der Parameter für die automatische Steuerung des Fahrzeugs wird in Abhängigkeit von der erfassten Verkehrssituation bestimmt. Die Verkehrssituation kann beispielsweise eine Kreuzung, eine Auffahrt, ein beschrankter Bahnübergang oder eine Lichtzeichenanlage umfassen. Die Umgebungsinformation kann beispielsweise mit Hilfe einer Kamera des Fahrzeugs erfasst werden. Die Umgebungsinformation kann alternativ oder zusätzlich über Nachrichten erfasst werden, welche über eine Infrastruktur-zu-Fahrzeug-Kommunikation übermittelt werden. Aus der erfassten Umgebungsinformation kann das Fahrzeug einen Anfahrvorgang bestimmen und die automatische Steuerung gemäß dem geplanten Anfahrvorgang parametrieren. Der geplante Anfahrvorgang kann ferner über die zuvor beschriebene Fahrintentionsnachricht an ein Folgefahrzeug übertragen werden. Das Folgefahrzeug kann seinen Anfahrvorgang an den Anfahrvorgang des Fahrzeugs anpassen und dadurch kann ein Ziehharmonika-Effekt beim Anfahren verringert werden.

Gemäß der vorliegenden Erfindung wird weiterhin eine Vorrichtung zum Ansteuern einer teilautomatisierten oder automatischen Steuerung eines Fahrzeugs beim Anfahren bereitgestellt. Die Vorrichtung umfasst einen Eingang zum Empfangen einer Fahrintentionsnachricht von einem weiteren Fahrzeug. Die Fahrintentionsnachricht zeigt eine Information über einen geplanten Anfahrzeitpunkt eines weiteren Fahrzeugs an. Die Vorrichtung umfasst ferner eine Verarbeitungsvorrichtung, welche in der Lage ist, Folgendes auszuführen. Zunächst bestimmt die Verarbeitungsvorrichtung, ob sich das weitere Fahrzeug direkt vor dem Fahrzeug befindet. In Abhängigkeit von der von dem weiteren Fahrzeug empfangenen Fahrintentionsnachricht bestimmt die Verarbeitungsvorrichtung einen Parameter für die teilautomatisierte/automatische Steuerung des Fahrzeugs. Wenn die Verarbeitungsvorrichtung bestimmt hat, dass sich das weitere Fahrzeug direkt vor dem Fahrzeug befindet, steuert sie die teilautomatisierte/automatische Steuerung des Fahrzeugs mit dem Parameter an. Der Parameter kann zum Beispiel eine Beschleunigung, einen zum vorausfahrenden Fahrzeug einzuhaltenden Abstand, Weg-Zeit-Punkte und/oder eine Trajektorie umfassen. Die Vorrichtung ist daher zur Durchführung des zuvor beschriebenen Verfahrens oder einer seiner Ausführungsformen geeignet und umfasst daher auch die vorbeschriebenen Vorteile.

Gemäß der vorliegenden Erfindung wird weiterhin eine Vorrichtung zum Ansteuern einer teilautomatisierten/automatischen Steuerung eines Fahrzeugs beim Anfahren bereitgestellt, welche eine Erfassungsvorrichtung und eine Verarbeitungsvorrichtung umfasst. Die Erfassungsvorrichtung dient zum Erfassen einer Umgebungsinformation vor dem Fahrzeug. Die Verarbeitungsvorrichtung ist in der Lage, einen Parameter für die teilautomatisierte/automatische Steuerung des Fahrzeugs beim Anfahren in Abhängigkeit von der erfassten Umgebungsinformation zu bestimmen. Ferner ist die Verarbeitungsvorrichtung in der Lage, eine Fahrintentionsnachricht zu erzeugen. Die Fahrintentionsnachricht zeigt eine Information über den geplanten Anfahrzeitpunkt des Fahrzeugs an. Schließlich ist die Verarbeitungsvorrichtung in der Lage, die Fahrintentionsnachricht über eine Fahrzeug-zu-Fahrzeug-Kommunikation zu senden. Die Vorrichtung ist somit zur Durchführung des zuvor beschriebenen Verfahrens geeignet und umfasst daher auch die im Zusammenhang mit den zuvor beschriebenen Verfahren beschriebenen Vorteile.

Schließlich wird ein Fahrzeug bereitgestellt, welches eine Steuervorrichtung für eine teilautomatisierte oder automatische Steuerung des Fahrzeugs und eine Fahrzeug-zu-Fahrzeug-Kommunikationsvorrichtung zum Senden von Daten zu einem weiteren Fahrzeug und/oder Empfangen von Daten von dem weiteren Fahrzeug umfasst. Die Steuervorrichtung kann beispielsweise eine automatische Längssteuerung des Fahrzeugs umfassen. Das Fahrzeug umfasst weiterhin eine der zuvor beschriebenen Vorrichtungen zum Ansteuern der teilautomatisierten/automatischen Steuerung des Fahrzeugs beim Anfahren. Diese Vorrichtung zum Ansteuern der teilautomatisierten/automatischen Steuerung beim Anfahren ist mit der Steuervorrichtung und der Fahrzeug-zu-Fahrzeug-Kommunikationsvorrichtung gekoppelt. Das Fahrzeug ist daher in der Lage, bei einem Anfahren den eigenen Anfahrvorgang an einen geplanten Anfahrvorgang eines vorausfahrenden Fahrzeugs anzupassen und zusätzlich den eigenen geplanten Anfahrvorgang an ein Folgefahrzeug zu übertragen. Wenn sich das Fahrzeug in einer Kolonnenfahrt befindet, kann es daher teilautomatisiert oder automatisch so anfahren, dass ein Ziehharmonika-Effekt in der Kolonne vermieden wird.

Die vorliegende Erfindung wird nachfolgend unter Bezugnahme auf die Zeichnungen im Detail beschrieben werden.
Fig. 1 zeigt schematisch ein Fahrzeug mit einer Vorrichtung zum Ansteuern einer teilautomatisierten/automatischen Steuerung des Fahrzeugs beim Anfahren gemäß einer Ausführungsform der vorliegenden Erfindung.
Fig. 2-4 zeigen verschiedene Szenarien von Fahrzeugkolonnen mit Fahrzeugen gemäß einer Ausführungsform der vorliegenden Erfindung.
Fig. 5 zeigt Verfahrensschritte eines Verfahrens gemäß einer Ausführungsform der vorliegenden Erfindung.

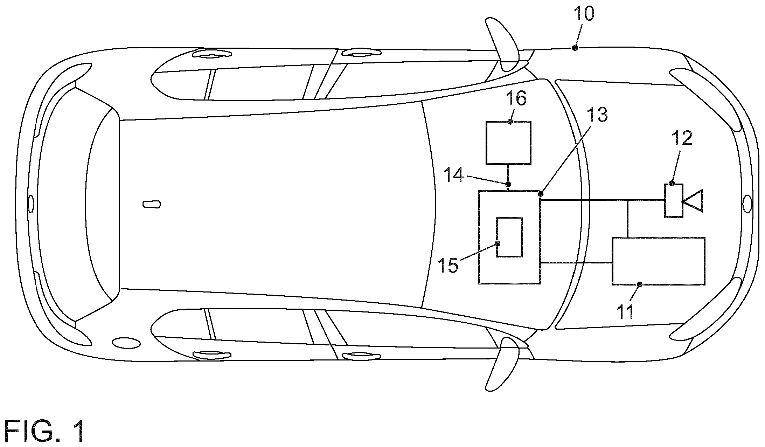

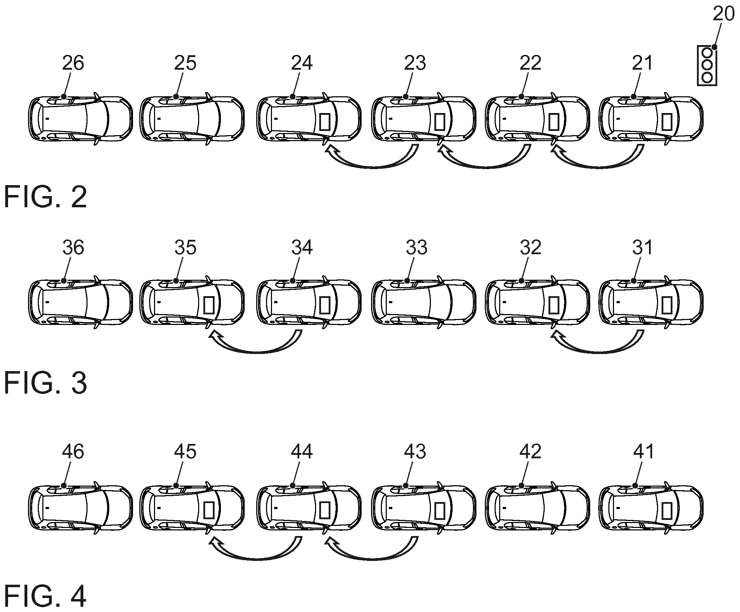

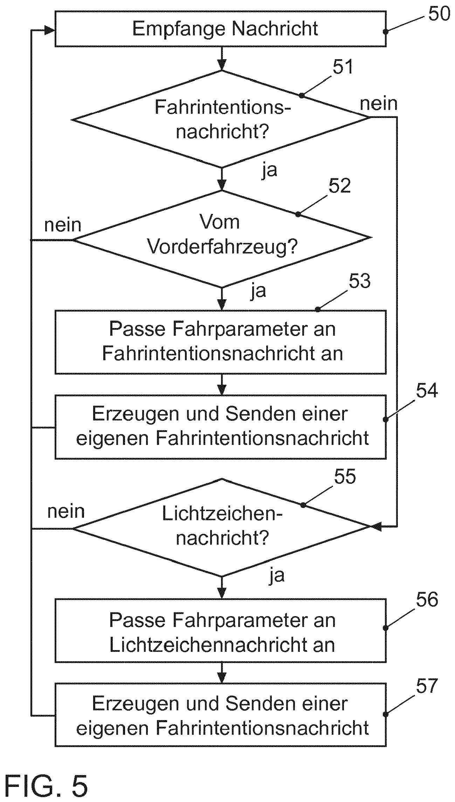

Nachfolgend wird zunächst in Verbindung mit Figur 1 beispielhaft eine Struktur eines Fahrzeugs mit einer erfindungsgemäßen Längsregelung beschrieben. Die Arbeitsweise der Längsregelung wird dann für verschiedene in den Figuren 2-4 gezeigten Szenarien in Verbindung mit Figur 5 im Detail anhand verschiedener Beispiele beschrieben werden.

Fig. 1 zeigt ein Fahrzeug 10 mit einer Steuervorrichtung 11. Die Steuervorrichtung 11 ist beispielsweise eine Vorrichtung zur automatischen Längssteuerung des Fahrzeugs 10. Die Steuervorrichtung 11 kann beispielsweise die Geschwindigkeit des Fahrzeugs 10 durch Ansteuern eines (nicht gezeigten) Antriebsmotors und einer (nicht gezeigten) Bremsanlage des Fahrzeugs 10 einstellen. Dabei kann die Steuervorrichtung 11 beispielsweise einen Abstand zu einem vorausfahrenden Fahrzeug und eine eingestellte Sollgeschwindigkeit berücksichtigen.

Derartige Steuervorrichtungen 11 werden beispielsweise als adaptive Geschwindigkeitsregelungsanlagen (Engl.: "adaptive cruise control", ACC) bezeichnet. Die Steuervorrichtung 11 kann beispielsweise mit Sensoren des Fahrzeugs gekoppelt sein, um einen Abstand zu einem vorausfahrenden Fahrzeug zu bestimmen. Ferner kann die Steuervorrichtung 11 beispielsweise mit einer Kamera 12 des Fahrzeugs gekoppelt sein, um ein Abbild einer Umgebung vor dem Fahrzeug 10 bei der Längssteuerung des Fahrzeugs 10 zu berücksichtigen. Die Steuervorrichtung 11 kann ferner eine automatische Quersteuerung des Fahrzeugs bereitstellen oder unterstützen, sodass das Fahrzeug vollautomatisch betrieben werden kann. Die Fahrintention zeigt eine Information über einen geplanten Anfahrzeitpunkt an.

Das Fahrzeug 10 umfasst ferner eine Vorrichtung 13 zum Ansteuern der automatischen Steuervorrichtung 11 des Fahrzeugs 10 beim Anfahren. Die Vorrichtung 13 umfasst einen Eingang 14 zum Empfangen einer Fahrintentionsnachricht von einem weiteren Fahrzeug über eine Fahrzeug-zu-Fahrzeug-Kommunikationsvorrichtung 16. Die Fahrintentionsnachricht zeigt eine Information über einen geplanten Anfahrvorgang des weiteren Fahrzeugs an. Die Vorrichtung 13 umfasst ferner eine Verarbeitungsvorrichtung 15, beispielsweise eine Mikroprozessorsteuerung. Die Vorrichtung 13 kann ferner eine Erfassungsvorrichtung zum Erfassen einer Umgebungsinformation vor dem Fahrzeug umfassen, beispielsweise die Kamera 12.

Die Arbeitsweise der Vorrichtung 13 wird nachfolgend für verschiedene Szenarien, welche in den Figuren 2-4 dargestellt sind, unter Bezugnahme auf ein in Fig. 5 dargestelltes Verfahren im Detail beschrieben werden. Obwohl in der Fig. 1 die Vorrichtung 13, die Steuervorrichtung 11 und die Kommunikationsvorrichtung 16 als getrennte Vorrichtungen dargestellt sind, ist es selbstverständlich, dass diese Vorrichtungen auch integriert ausgebildet sein können oder als weiter aufgeteilte Teilvorrichtungen ausgebildet sein können.

Technische Basis des nachfolgend beschriebenen Verfahrens ist eine Kommunikation von Fahrzeugen untereinander und gegebenenfalls zusätzlich mit einer straßenseitigen Infrastruktur. Eine derartige Kommunikation wird auch als V2X-Technologie bezeichnet.

Eine Kommunikation von Fahrzeugen untereinander ist in einem anderen Zusammenhang beispielsweise aus der DE 10 2008 036 131 A1 bekannt. Die DE 10 2008 036 131 A1 betrifft ein Verfahren zur Erkennung einer Verkehrssituation in einer Fahrzeugumgebung, um eine automatische Abstandsregelung zu verbessern. Für die Ermittlung der Verkehrssituation im Umfeld des eigenen Fahrzeugs werden fahrdynamische Daten der anderen Verkehrsteilnehmer ermittelt, beispielsweise deren Position sowie ihre Geschwindigkeit und Richtung. Diese Daten können in sehr kurzen Funktelegrammen mittels einer drahtlosen Fahrzeug-zu-Fahrzeug-Kommunikation von Fahrzeug zu Fahrzeug übertragen werden. Aus den fahrdynamischen Daten vorausfahrender Fahrzeuge kann beispielsweise eine Fahrzeugkolonne erkannt werden und deren mittlere Kolonnengeschwindigkeit ermittelt werden. Diese mittlere Kolonnengeschwindigkeit kann dem Fahrer mitgeteilt werden. Wenn der Fahrer sich an diese mittlere Geschwindigkeit hält und bei schnellerem Fahren der Kolonne nicht mitbeschleunigt, kann bei hoher Verkehrsdichte ein Stopp-and-Go-Fahren vermieden werden.

Aus der DE 10 2010 013 647 B4 ist darüber hinaus in einem anderen Zusammenhang eine Kommunikation zwischen einer Infrastrukturvorrichtung, z.B. einer Ampel, und einem Fahrzeug bekannt. Die DE 10 2010 013 647 B4 betrifft ein Verfahren zum Steuern von mehreren Fahrzeugen, um die mehreren Fahrzeuge in einer Kolonne zu betreiben. Aus den mehreren Fahrzeugen wird ein Fahrzeug als Leitfahrzeug ausgewählt. Dieses Leitfahrzeug überwacht von jedem der mehreren Fahrzeuge durch eine Fahrzeug-Fahrzeug-Kommunikation auf der Basis von Daten von einer jeweiligen globalen Positionsbestimmungsvorrichtung in jedem der mehreren Fahrzeuge eine jeweilige tatsächliche Position. Auf der Basis der tatsächlichen Position von jedem der mehreren Fahrzeuge wird ein jeweiliger minimaler erwünschter Abstand zwischen den Fahrzeugen bestimmt. Auf der Basis der tatsächlichen Position von jedem der Fahrzeuge wird ferner für jedes der mehreren Fahrzeuge ein maximal kraftstoffeffizienter Abstand bestimmt. Auf der Grundlage der so bestimmten Abstände zwischen den Fahrzeugen wird für jedes Fahrzeug eine jeweilige befohlene Fahrzeugposition gewählt und zu dem jeweiligen Fahrzeug übertragen und das jeweilige Fahrzeug auf der Basis der jeweiligen befohlenen Fahrzeugposition betrieben. In Verbindung mit Informationen von Infrastrukturvorrichtungen (beispielsweise Verkehrsampeln) kann ermöglicht werden, dass die gesamte Kolonne zur nächsten Grünlichtperiode die Ampel passiert, ohne die Kolonne aufzulösen.

Bei der vorliegenden Erfindung werden über die Kommunikation der Fahrzeuge untereinander Nachrichten zur Fahrintention der Fahrzeuge übermittelt. Die Fahrintention kann beispielsweise mittels einer über Weg-Zeit-Punkte beschriebenen Trajektorie angegeben werden. Die Fahrintention gibt somit zukünftige Bewegungszustände oder Aufenthaltsorte eines Fahrzeugs an. In Abhängigkeit von der Fahrintention eines vorausfahrenden Fahrzeugs wird eine automatisierte Längsregelung und gegebenenfalls auch Querregelung des Fahrzeugs durchgeführt. Insbesondere wird das Anfahr- und Folgeverhalten situationsabhängig und unter Berücksichtigung der Fahrintention des Vorderfahrzeugs parametriert.

In realen Verkehrsumgebungen werden zur Durchführung des nachfolgend beschriebenen Verfahrens geeignete Fahrzeuge vorhanden sein und andere Fahrzeuge, welche nicht mit der entsprechenden Technologie ausgestattet sind und daher nicht zur Durchführung des nachfolgend beschriebenen Verfahrens in der Lage sind. Im Folgenden werden die Fahrzeuge daher als "mit Kolonnenstarttechnologie ausgestattete Fahrzeuge" oder als "ohne Kolonnenstarttechnologie ausgestattete Fahrzeuge" bezeichnet werden.

Zumindest die mit Kolonnenstarttechnologie ausgestatteten Fahrzeuge können zusätzlich Informationen von Infrastrukturobjekten erhalten, beispielsweise Informationen zu den Phasen einer Ampel, einer sogenannten Lichtzeichenanlage LZA, oder einer Topologie einer Kreuzung. Die Informationen zu den Ampelphasen umfassen beispielsweise einen aktuellen Signalzustand, geplante nächste Schaltzeitpunkte, eine Phasenlänge oder eine Information, welche das gesamte Signalphasenzeitverhalten beschreibt (z.B. signal phase and timing, SPAT). Die Informationen zur Topologie der Kreuzung können z.B. den Fahrspurenverlauf und/oder die Anzahl der Fahrspuren umfassen (z.B. MAP). Die Fahrzeuge können beispielsweise die Ampelphaseninformationen von der Ampelsteuerung lokal direkt über eine Station am Straßenrand eines intelligenten Verkehrssystems (z.B. intelligent transportation system roadside station) vorzugsweise per Funk oder von einem zentralen Server über beispielsweise eine Mobilfunkverbindung erhalten. Die Ampelphaseninformationen können alternativ oder zusätzlich aus Fließdaten von Fahrzeugen (sogenannten floating car data) oder Fließdaten von Mobilfunkgeräten (sogenannten floating probe data) mit Hilfe eines Servers abgeleitet werden und über beispielsweise eine Mobilfunkverbindung zu den Fahrzeugen übertragen werden. Hierzu können ferner fahrzeugeigene Kameras oder Kameras von Mobilfunkgeräten zur Aktualisierung und Synchronisierung dieser Daten eingesetzt werden.

Wie zuvor beschrieben, wird es in der Praxis vorkommen, dass einzelne in einer Fahrzeugschlange vor einer Ampel auf die Grünphase wartende Fahrzeuge nicht mit der Kolonnenstarttechnologie ausgestattet sind. Fahrzeuge mit und ohne Kolonnenstarttechnologie können beliebig in einer Fahrzeugschlange gemischt sein. In den Figuren 2-4 sind drei verschiedene Szenarien von Fahrzeugen in einer Fahrzeugschlage dargestellt. Im Rahmen dieser Beschreibung wird definiert, dass nicht alle vor einer Ampel in einer Fahrzeugschlange stehenden Fahrzeuge eine Kolonne bilden, sondern nur diejenigen Fahrzeuge, welche direkt hintereinander stehen und bei denen das Vorderfahrzeug zumindest Fahrintentionsnachrichten sendet und das Folgefahrzeug diese für den Kolonnenstart verarbeitet. Eine Kolonne kann aus zwei oder mehr Fahrzeugen bestehen. Sobald ein Fahrzeug in der Fahrzeugschlange steht, welches keine Fahrintentionsnachrichten sendet, ist die Kolonne beendet. Eine neue Kolonne in der Fahrzeugschlange entsteht durch zwei oder mehr aufeinander folgende Fahrzeuge, die entsprechend der oben genannten Definition Fahrintentionsnachrichten senden und/oder verarbeiten.

Es ist zu unterscheiden, ob das erste Fahrzeug einer Kolonne auch das erste Fahrzeug der Fahrzeugschlange ist und an beispielsweise einer Ampelhaltelinie steht, oder ob es ein ohne Kolonnenstarttechnologie ausgestattetes Fahrzeug als Vorderfahrzeug hat. Entsprechend werden nachfolgend Fahrzeugrollen innerhalb der Fahrzeugschlange bzw. der Fahrzeugkolonne definiert.

Die erste Fahrzeugrolle, welche ein Fahrzeug einnehmen kann, ist die des Ampelstartfahrzeugs (nachfolgend auch als LZA-Startfahrzeug bezeichnet). Das LZA-Startfahrzeug ist mit der Kolonnenstarttechnologie ausgestattet, sendet Fahrintentionsnachrichten und ist das erste Fahrzeug an der Haltelinie vor einer LZA. Steht ein Fahrzeug an der Haltelinie, welches keine Fahrintentionsnachrichten sendet, gibt es kein LZA-Startfahrzeug in der Fahrzeugschlange.

Eine weitere Fahrzeugrolle ist das innere Startfahrzeug. Das innere Startfahrzeug ist ein mit der Kolonnenstarttechnologie ausgestattetes Fahrzeug, sendet eigene Fahrintentionsnachrichten aus und steht hinter einem Fahrzeug, welches keine Fahrintentionsnachrichten sendet. Es steht also beispielsweise hinter einem Fahrzeug ohne Kolonnenstarttechnologie. Es steht vor einem nachfolgend beschriebenen Folgefahrzeug und ist nicht das erste Fahrzeug an der Haltelinie einer Ampel.

Eine weitere Fahrzeugrolle ist das Folgefahrzeug. Das Folgefahrzeug ist ein mit der Kolonnenstarttechnologie ausgestattetes Fahrzeug, verarbeitet die Fahrintentionsnachrichten seines Vorderfahrzeugs, sendet selbst Fahrintentionsnachrichten und passt seinen Anfahrvorgang gemäß der Fahrintentionsnachrichten des Vorderfahrzeugs an. Es steht entweder hinter einem LZA-Startfahrzeug oder hinter einem inneren Startfahrzeug oder hinter einem anderen Folgefahrzeug.

Alle übrigen Fahrzeuge sind ohne Kolonnenstarttechnologie ausgestattete Fahrzeuge. Diese Fahrzeuge senden keine Fahrintentionsnachrichten aus und passen ihren Anfahrvorgang nicht an Fahrintentionsnachrichten des Vorderfahrzeugs an. Ohne Kolonnenstarttechnologie ausgestattete Fahrzeuge können an jeder Stelle in der Fahrzeugschlange stehen.

Fig. 2-4 zeigen drei Szenarien von Fahrzeugschlangen.

In Fig. 2 steht eine Fahrzeugschlange an einer Ampel oder Lichtzeichenanlage (LZA) 20. Die Fahrzeugschlange umfasst Fahrzeuge 21-26. Das Fahrzeug 21 ist das LZA-Startfahrzeug, die Fahrzeuge 22-24 sind Folgefahrzeuge und die Fahrzeuge 25 und 26 sind ohne Kolonnenstarttechnologie ausgestattete Fahrzeuge. Die Fahrzeuge 21-24 bilden daher eine für einen Kolonnenstart geeignete Kolonne von Fahrzeugen im Sinne der vorliegenden Beschreibung.

Fig. 3 zeigt ein weiteres Szenario einer Fahrzeugschlange mit Fahrzeugen 31-36. Die Fahrzeuge 31, 32, 34 und 35 sind mit der Kolonnenstarttechnologie ausgestattet und die Fahrzeuge 33 und 36 sind nicht mit der Kolonnenstarttechnologie ausgestattet. Die Fahrzeuge 31 und 32 bilden somit eine erste Kolonne und die Fahrzeuge 34 und 35 bilden eine zweite Kolonne. Fahrzeug 31 ist das LZA-Startfahrzeug der ersten Kolonne und das Fahrzeug 32 ein Folgefahrzeug in der ersten Kolonne. Das Fahrzeug 34 ist das innere Startfahrzeug in der zweiten Kolonne und das Fahrzeug 35 ist ein Folgefahrzeug in der zweiten Kolonne.

Fig. 4 zeigt noch ein weiteres Szenario einer Fahrzeugschlange mit Fahrzeugen 41-46. Die Fahrzeuge 41, 43, 44 und 45 sind mit der Kolonnenstarttechnologie ausgestattet und die Fahrzeuge 42 und 46 sind nicht mit der Kolonnenstarttechnologie ausgestattet. Das Fahrzeug 41 ist zwar ein LZA-Startfahrzeug, hat jedoch kein Folgefahrzeug und ist somit nicht Bestandteil einer Fahrzeugkolonne, sondern ein Einzelfahrzeug. Fahrzeug 43 ist ein inneres Startfahrzeug einer Kolonne, welche ferner die Fahrzeuge 44 und 45 als Folgefahrzeuge umfasst.

Nachfolgend wird der Funktionsablauf des Kolonnenstarts eines mit der Kolonnenstarttechnologie ausgestatteten Fahrzeugs in Verbindung mit Figur 5 in einer vereinfachten Art und Weise beschrieben. Details für die Fahrzeuge in den verschiedenen Fahrzeugrollen der Figuren 2-4 werden anschließend im Detail beschrieben.

Bei dem in Fig. 5 gezeigten Verfahren wird in Schritt 50 eine Nachricht über die Kommunikationsvorrichtung 16 empfangen. Die Nachricht kann beispielsweise eine Fahrintentionsnachricht sein. Dies wird im Schritt 51 überprüft. Falls es sich bei der Nachricht um eine Fahrintentionsnachricht handelt, wird im Schritt 52 überprüft, ob die Fahrintentionsnachricht von dem Vorderfahrzeug ausgesendet wurde. Beispielsweise kann in Fig. 2 das Fahrzeug 22 eine Fahrintentionsnachricht von dem Fahrzeug 21 erhalten. Wenn die Fahrintentionsnachricht von dem Vorderfahrzeug empfangen wurde, werden im Schritt 53 die Fahrparameter an die Fahrintentionsnachricht angepasst. In dem obigen Beispiel kann das Fahrzeug 22 seine Parameter zum Anfahren an die Fahrintentionsnachricht des Fahrzeugs 21 anpassen. Die Fahrintentionsnachricht kann beispielsweise Weg-Zeit-Punkte einer Trajektorie des Fahrzeugs 21 beim Anfahren umfassen. In Abhängigkeit von den angepassten Parametern für den Anfahrvorgang wird im Schritt 54 eine weitere eigene Fahrintentionsnachricht erzeugt und ausgesendet. In dem obigen Beispiel kann das Fahrzeug 22 eine Fahrintentionsnachricht erzeugen und diese aussenden, sodass das Fahrzeug 23 diese Fahrintentionsnachricht empfangen kann und seine Fahrparameter beim Anfahren entsprechend anpassen kann. Danach wird das Verfahren im Schritt 50 fortgesetzt.

Falls im Schritt 51 festgestellt wird, dass die empfangene Nachricht keine Fahrintentionsnachricht ist, wird im Schritt 55 überprüft, ob die Nachricht eine Lichtzeichennachricht von beispielsweise der in Fig. 2 gezeigten Lichtzeichenanlage 20 ist. Falls die Nachricht eine Lichtzeichennachricht ist, kann das empfangende Fahrzeug seine Fahrparameter an Informationen aus der Lichtzeichennachricht im Schritt 56 anpassen. Dies ist insbesondere für das Fahrzeug 21 interessant, da dieses Fahrzeug anhand der Lichtzeichennachricht beispielsweise den Anfahrzeitpunkt für seine Anfahrtrajektorie genau bestimmen kann. Aber auch für weitere Fahrzeuge, beispielsweise die Folgefahrzeuge 22-24, kann eine Lichtzeichennachricht nützliche Informationen enthalten. Beispielsweise können die Fahrzeuge abschätzen, wann ein Motor des jeweiligen Fahrzeugs zu starten ist oder ob es sich lohnt, den Motor des jeweiligen Fahrzeugs noch abzuschalten. Auf der Grundlage der angepassten Fahrparameter wird im Schritt 57 eine Fahrintentionsnachricht erzeugt und gesendet. Insbesondere das LZA-Startfahrzeug, beispielsweise das Fahrzeug 21 der Fig. 2, kann bereits auf der Grundlage der Lichtzeichennachricht eine Anfahrtrajektorie bestimmen und diese über die Fahrintentionsnachricht an das Folgefahrzeug 22 aussenden.

Der zuvor in einer Übersicht beschriebene Funktionsablauf des Kolonnenstarts wird nachfolgend für die verschiedenen Situationen und Szenarien sowie Fahrzeugrollen näher beschrieben. Die Funktion des Kolonnenstarts verfolgt das Ziel, dass ein Folgefahrzeug seinem Vorderfahrzeug nach dessen Start folgt und dabei ein Ziehharmonika-Effekt minimiert wird. Hierzu werden die Fahrintentionsnachrichten des Vorderfahrzeugs von einem Regelsystem der automatisierten Längsregelung des Folgefahrzeugs verarbeitet.

Die Regelung kann beispielsweise auf Weg-Zeit-Punkten der Trajektorie des Vorderfahrzeugs erfolgen und weitere Eingangsgrößen berücksichtigen, wie zum Beispiel Status- und Ereignisnachrichten seiner Vorderfahrzeuge, Informationen einer Frontsensorik des Fahrzeugs und Phaseninformationen der Lichtzeichenanlage 20.

Eine Beschleunigung des Folgefahrzeugs kann beispielsweise maximal so hoch gewählt werden, wie die Beschleunigung des vorausfahrenden Fahrzeugs. Eine Kopplung der Beschleunigungen der Fahrzeuge untereinander ist jedoch nicht erforderlich. So kann beispielsweise ein vorausfahrendes Fahrzeug mit einer höheren Beschleunigung starten als das Folgefahrzeug, beispielsweise weil das Folgefahrzeug dazu technisch nicht in der Lage ist. Das vorausfahrende Fahrzeug kann seine Beschleunigung somit unabhängig von der des Folgefahrzeugs wählen. Ebenso kann das Folgefahrzeug seine Beschleunigung frei wählen, beispielsweise die gleiche Beschleunigung wie das Vorderfahrzeug. Die Längsregelung der Fahrzeuge kann beispielsweise Kriterien der Energieeffizienz berücksichtigen und daher die Beschleunigungen innerhalb technischer Grenzen aneinander anpassen.

Weiterhin kann ein Folgefahrzeug unter Berücksichtigung der Phaseninformationen der Lichtzeichenanlage, seiner Position in Bezug auf eine Haltelinie der Lichtzeichenanlage und der Fahrintentionsnachrichten sowie Status- und Ereignisnachrichten seiner Vorderfahrzeuge abschätzen, ob es voraussichtlich in der nächsten Grünphase die Haltelinie passieren kann. Kann beispielsweise das Vorderfahrzeug die Haltelinie in der Grünphase passieren, das Folgefahrzeug jedoch nicht, so kann beispielsweise eine energieeffiziente Annäherung an die Haltelinie erfolgen, statt eines Kolonnenstarts unter Vermeidung des Ziehharmonika-Effekts.

Für das LZA-Startfahrzeug 21 oder 31 wird beispielsweise die nachfolgend beschriebene Funktionalität von der Vorrichtung 13 realisiert. Das LZA-Startfahrzeug steht, wie in Fig. 2 bzw. 3 gezeigt ist, an einer Haltelinie einer Lichtzeichenanlage 20. Das LZA-Startfahrzeug 21, 31 erhält beispielsweise eine Lichtzeichennachricht direkt von der Lichtzeichenanlage 20. Alternativ oder zusätzlich kann das LZA-Startfahrzeug 21, 31 eine Lichtzeichennachricht indirekt von einem Server über beispielsweise eine Mobilfunkverbindung erhalten. Die Lichtzeichennachricht umfasst Phaseninformationen zu den Ampelphasen der Lichtzeichenanlage 20. In Abhängigkeit von der Phaseninformation plant das LZA-Startfahrzeug 21, 31 seinen Anfahrvorgang. Dabei kann beispielsweise ein Start eines abgeschalteten Antriebsmotors mit Hilfe einer Start-Stopp-Automatik geplant werden. Ferner können ein Zeitpunkt zum Einlegen eines Gangs, zum Betätigen einer Kupplung und zum Steuern des Antriebsmotors geplant werden. Auf der Grundlage dieser Planung können beispielsweise Weg-Zeit-Punkte der Trajektorie des LZA-Startfahrzeugs beim Anfahren bestimmt werden und in einer Fahrintentionsnachricht ausgesendet werden. Bei einem von einer Start-Stopp-Automatik abgeschalteten Motor erfolgt somit ein Start des Motors automatisch angepasst an die Schaltung der Lichtzeichenanlage. Nach dem Beginn der Grünphase startet das Fahrzeug automatisch. Es ist klar, dass die automatischen Fahrmanöver je nach Automatisierungsgrad vom Fahrer des Fahrzeugs zu überwachen sind.

Eine Start-Stopp-Automatik wird in einem anderen Zusammenhang in der DE 10 2008 042 306 A1 offenbart. Bei einem Verfahren für eine Start-Stopp-Automatik für einen Motor werden in der DE 10 2008 042 306 A1 externe Informationen über eine Verkehrssituation von einem Steuergerät des Fahrzeugs als Ausgangsdaten zum Umsetzen der Start-Stopp-Automatik verwendet. Die externen Informationen über die Verkehrssituation werden von einer weiteren Einrichtung bereitgestellt. Die weitere Einrichtung kann beispielsweise eine Lichtzeichenanlage bzw. Ampel sein. Die weitere Einrichtung kann alternativ oder ergänzend auch ein weiteres Fahrzeug sein. Die Erfindung ermöglicht somit die Abstimmung der Start-Stopp-Automatik des Motors auf Infrastruktureinrichtungen oder andere Fahrzeuge. Die Kommunikation zwischen dem Fahrzeug und der Infrastruktureinrichtung oder den anderen Fahrzeugen kann beispielsweise über eine sogenannte Car-to-Infrastructure-Kommunikation (C2I) bzw. eine Car-to-Car-Kommunikation (C2C) realisiert werden. An Ampeln, Kreuzungen und Einmündungen kann so beispielsweise ermittelt werden, wie lange das Egofahrzeug noch stehen muss. Insbesondere bei längeren Wartezeiten kann der Motor dann deutlich früher als bei herkömmlichen Systemen abgeschaltete werden, was Kraftstoff spart. Ebenfalls kann der Motor auch wieder rechtzeitig vor der Weiterfahrt gestartet werden. Ferner ist es möglich, bei sehr kurzer Anhaltedauer den Motor erst gar nicht auszuschalten.

In dem Fall, dass keine Lichtzeichennachricht von der Lichtzeichenanlage 20 zur Verfügung steht, kann das Fahrzeug 21, 31 das Umschalten der Lichtzeichenanlage selbst detektieren, zum Beispiel mit der Frontkamera 12. Sodann beschleunigt das Fahrzeug 21, 31 automatisch. Die sich durch die Beschleunigung ergebende Trajektorie wird über Fahrintentionsnachrichten ausgesendet. Falls das Fahrzeug das Umschalten der Lichtzeichenanlage nicht selbst detektieren kann, beispielsweise aufgrund einer verschmutzen Kamera oder Gegenlicht, wird der Start des Fahrzeugs vom Fahrer selbst initiiert. Ein Beschleunigen kann jedoch von der Steuervorrichtung 11 gesteuert werden oder aus beispielsweise einer Gaspedalstellung ermittelt werden, sodass eine voraussichtliche Trajektorie des Fahrzeugs in Form von Weg-Zeit-Punkten bestimmt werden kann und über eine Fahrintentionsnachricht ausgesendet werden kann.

Das innere Startfahrzeug, beispielsweise das Fahrzeug 34 in der Fig. 3 oder das Fahrzeug 43 in der Fig. 4, ist das erste Fahrzeug in einer Anfahrkolonne, steht jedoch nicht an der Haltelinie der Lichtzeichenanlage 20, sondern hinter einem Fahrzeug, welches nicht mit der Kolonnenstarttechnologie ausgestattet ist. Mit Hilfe einer Frontsensorik, beispielsweise der Frontkamera 12, beschleunigt das innere Startfahrzeug automatisch angepasst an das Vorderfahrzeug. Es beschleunigt also angepasst an das Fahrzeug 33 bzw. 42, sobald dieses beschleunigt. Sobald das innere Startfahrzeug ein Anfahren seines Vorderfahrzeugs ermittelt hat, wird der eigene Anfahrvorgang geplant und über Fahrintentionsnachrichten ausgesendet. Nachfolgende Fahrzeuge, beispielsweise die Fahrzeuge 35 bzw. 44, können ihren entsprechenden Anfahrvorgang auf der Grundlage der Fahrintentionsnachrichten planen.

Wenn keine Phaseninformationen der Lichtzeichenanlage 20 zur Verfügung stehen, kann das innere Startfahrzeug 34, 43 beispielsweise mit Hilfe einer Frontsensorik (z.B. Frontkamera 12) die Lichtzeichenanlage 20 beobachten, um einen Phasenwechsel auf Gelb oder Rot zu erfassen und das Fahrzeug rechtzeitig anzuhalten. Alternativ kann der Fahrer das Fahrmanöver überwachen und das Fahrzeug am Ende der Grünphase bei Rot zum Stehen bringen.

Wenn das innere Startfahrzeug 34, 43 Phaseninformationen von der Lichtzeichenanlage 20 direkt oder indirekt über einen Server erhält, kann das innere Startfahrzeug 34, 43 diese Phaseninformationen zur Steuerung des Anfahrvorgangs folgendermaßen verwenden. Bei einem aufgrund einer Start-Stopp-Automatik abgeschalteten Antriebsmotor erfolgt der Start des Motors automatisch angepasst an die Schaltung der Lichtzeichenanlage. Dabei kann wahlweise die Position des Fahrzeugs relativ zur Haltelinie der Lichtzeichenanlage berücksichtigt werden. Ferner kann abgeschätzt werden, wann das Vorderfahrzeug losfahren wird. Gegebenenfalls können hierzu verfügbare Fahrintentionsnachrichten von weiter vorne stehenden Fahrzeugen verwendet werden, beispielsweise von dem Fahrzeug 32 bzw. 41 in den Fig. 3 bzw. 4. Somit kann der Startzeitpunkt des Motors energieeffizient gewählt werden. Das innere Startfahrzeug 34, 43 schätzt unter Berücksichtigung der Phaseninformationen von der Lichtzeichenanlage, seiner Position in Bezug auf die Haltelinie der Lichtzeichenanlage und eines prognostizierten Fahrverhaltens des Vorderfahrzeugs sowie der gemessenen Werte der Frontsensorik und verfügbarer Fahrintentionsnachrichten von weiter vorausfahrenden Fahrzeugen ab, ob es voraussichtlich in der Grünphase die Haltelinie passieren kann. Wenn dabei bestimmt wird, dass das Vorderfahrzeug und das innere Startfahrzeug die Haltelinie in der Grünphase voraussichtlich passieren können, findet eine Folgefahrt statt. Wenn abgeschätzt wird, dass das Vorderfahrzeug und das innere Startfahrzeug die Haltelinie in der Grünphase nicht passieren können, findet eine energieeffiziente Folgefahrt statt. Wenn hingegen abgeschätzt wird, dass das Vorderfahrzeug die Haltelinie in der Grünphase passieren kann und das innere Startfahrzeug nicht, erfolgt keine Folgefahrt. Stattdessen erfolgt eine energieeffiziente Annährung an die Haltelinie.

Für das Folgefahrzeug, beispielsweise die Fahrzeuge 22-24 der Fig. 2, die Fahrzeuge 32 und 35 der Fig. 3 und die Fahrzeuge 44, 45 der Fig. 4, realisiert die Vorrichtung 13 die nachfolgend beschriebene Kolonnenstartfunktion. Das Folgefahrzeug steht hinter einem LZA-Startfahrzeug 21, 23, oder hinter einem inneren Startfahrzeug 34, 43 oder hinter einem vor ihm befindlichen Folgefahrzeug 22, 23. Es empfängt die Fahrintentionsnachrichten des jeweiligen Vorderfahrzeugs. Bei einem aufgrund einer Start-Stopp-Automatik abgeschalteten Motor erfolgt der Start des Motors automatisch angepasst an die Fahrintentionsnachricht des Vorderfahrzeugs. Es folgt seinem Vorderfahrzeug automatisiert, nachdem dieses begonnen hat, zu beschleunigen. Die eigene Trajektorie wird auf der Grundlage der von dem Vorderfahrzeug empfangenen Trajektorie bestimmt und über Fahrintentionsnachrichten an Folgefahrzeuge ausgesendet.

Wenn das Folgefahrzeug Phaseninformationen von der Lichtzeichenanlage 20 empfängt, schätzt es unter Berücksichtigung dieser Phaseninformation, seiner eigenen Position in Bezug auf die Haltelinie der Lichtzeichenanlage und des prognostizierten Fahrverhaltens der Vorderfahrzeuge ab, ob es voraussichtlich in der Grünphase die Haltelinie passieren kann. Wenn das Vorderfahrzeug und das Folgefahrzeug die Haltelinie voraussichtlich in der Grünphase passieren können, findet eine Folgefahrt statt. Wenn das Vorderfahrzeug und das Folgefahrzeug die Haltelinie voraussichtlich in der Grünphase nicht passieren können, findet eine energieeffiziente Folgefahrt statt. Dabei kann auch der Abstand zum Vorderfahrzeug aus Energieeffizienzgründen vergrößert werden. Wenn das Vorderfahrzeug die Haltelinie voraussichtlich passieren kann und das Folgefahrzeug die Haltlinie voraussichtlich nicht passieren kann, erfolgt keine Folgefahrt, sondern eine energieeffiziente Annäherung an die Haltelinie.

Stehen dem Folgefahrzeug keine Phaseninformationen der Lichtzeichenanlage zur Verfügung, ist eine Prognose, ob das Folgefahrzeug voraussichtlich in der Grünphase die Haltelinie passieren kann, nicht ohne Weiteres zuverlässig möglich. Das Fahrzeug folgt dem Vorderfahrzeug unter Berücksichtigung der mittels der Fahrintentionsnachrichten übermittelten Trajektorie des Vorderfahrzeugs und wird durch einen Eingriff des Fahrers oder durch beispielsweise eine optische Detektion des Umschaltens der Lichtzeichenanlage auf Gelb oder Rot zum Stehen gebracht.

Zusammen betrachtet läuft die Kolonnenfahrt der Fahrzeuge 21-24 der Fig. 2 beispielsweise folgendermaßen ab. Die Lichtzeichenanlage 20 sendet Phaseninformationen aus, welche von allen Fahrzeugen 21-26 empfangen werden können. Insbesondere das LZA-Startfahrzeug 21 verwendet diese Information, um einen Anfahrvorgang zu planen. Die Folgefahrzeuge 22-24 können die Phaseninformationen verwenden, um beispielsweise einen Start für ihre Antriebsmotoren zu bestimmen. Die Rollen der einzelnen Fahrzeuge ergeben sich aus den jeweiligen Positionen in Bezug auf die Lichtzeichenanlage sowie ihrer Umgebungsinformationen, also ob das Fahrzeug ein vorausfahrendes Fahrzeug detektiert oder nicht. Der Umschaltzeitpunkt der Lichtzeichenanlage 20 auf Grün ist der Startzeitpunkt für den Anfahrvorgang der Kolonne. Diesen Startzeitpunkt verwendet das LZA-Startfahrzeug 21 als Startzeitpunkt für seinen Anfahrvorgang. Eine geplante Trajektorie des LZA-Startfahrzeugs wird über eine oder mehrere Fahrintentionsnachrichten an das Folgefahrzeug 22 übertragen, wie es in Fig. 2 durch den Pfeil dargestellt ist. Das Folgefahrzeug 22 verarbeitet die Fahrintentionsnachrichten des LZA-Startfahrzeugs und sendet eigene Fahrintentionsnachrichten mit seinen angepassten Anfahrparametern an das Folgefahrzeug 23, wie es durch den Pfeil in Fig. 2 angedeutet wird. Das Folgefahrzeug 23 verarbeitet die Fahrintentionsnachrichten von dem Fahrzeug 22 und sendet Fahrintentionsnachrichten mit seinen angepassten Anfahrparametern. Das Folgefahrzeug 24 verarbeitet die Nachrichten von dem Fahrzeug 23 und sendet Fahrintentionsnachrichten mit seinen angepassten Anfahrparametern. Dies kann bei längeren Kolonnen beliebig fortgesetzt werden. In den Folgefahrzeugen können die erhaltenen Fahrintentionsnachrichten bezüglich ihrer Relevanz gefiltert und plausibilisiert werden. Dabei können beispielsweise Fahrstreifendaten, eine Position des Fahrzeugs in Bezug auf die Haltelinie der Lichtzeichenanlage und Informationen der fahrzeugeigenen Sensorik verwendet werden. Eine Plausibilisierung der erhaltenen Fahrintentionsnachrichten kann beispielsweise über Schaltzeitpunkte der Lichtzeichenanlage oder Abstandsmessungen zum Vorderfahrzeug durchgeführt werden. Bei nicht plausiblen Messdaten kann das automatische Anfahren abgebrochen werden oder bis zum Empfang neuer Daten verzögert werden. Auch eine Bestimmung der Position innerhalb der Kolonne, d.h. eine Bestimmung der eigenen Fahrzeugrolle, kann erneut durchgeführt werden. Der automatische Anfahrvorgang kann im Störungsfall abgebrochen werden. Störfälle sind beispielsweise, wenn die Kommunikation mit der Lichtzeichenanlage unterbrochen ist, wenn die Kommunikation mit dem Vorderfahrzeug unterbrochen ist oder wenn in einem definierten Zeitintervall keine Fahrintentionsnachrichten mehr empfangen werden. Der Fahrer des Fahrzeugs kann über den Abbruch der automatischen Anfahrfunktion informiert werden, ebenso wie über ein zuverlässiges Arbeiten der automatischen Anfahrfunktion.

Das zuvor beschriebene Verfahren zum teilautomatisierten/automatischen Anfahren kann nicht nur im Bereich einer Kreuzung in Verbindung mit einer Lichtzeichenanlage durchgeführt werden, sondern auch zum Beispiel bei einer gemeinsamen Auffahrt auf eine Straße oder Autobahn und in Stausituationen sowie bei einer Kopplung von mehreren Fahrzeugen in einer Kolonne hinter einem Führungsfahrzeug, einem sogenannten Platoonfahrzeug.

### Bezugszeichenliste

- 10: Fahrzeug
- 11: Steuervorrichtung
- 12: Kamera
- 13: Vorrichtung
- 14: Eingang
- 15: Verarbeitungsvorrichtung
- 16: Fahrzeug-zu-Fahrzeug-Kommunikationsvorrichtung
- 21: LZA-Startfahrzeug,
- 22-24: Folgefahrzeug
- 25,26: Fahrzeug ohne Kolonnenstarttechnologie
- 31: LZA-Startfahrzeug,
- 32: Folgefahrzeug
- 33: Fahrzeug ohne Kolonnenstarttechnologie
- 34: inneres Startfahrzeug
- 35: Folgefahrzeug
- 36: Fahrzeug ohne Kolonnenstarttechnologie
- 41: LZA-Startfahrzeug
- 42: Fahrzeug ohne Kolonnenstarttechnologie
- 43: inneres Startfahrzeug
- 44,45: Folgefahrzeug
- 46: Fahrzeug ohne Kolonnenstarttechnologie
- 50-57: Schritt

## Patentansprüche

1. Verfahren für eine teilautomatisierte oder automatische Steuerung eines Fahrzeugs beim Anfahren, umfassend:
- Empfangen einer Fahrintentionsnachricht von einem weiteren Fahrzeug (21), welche eine Information über einen geplanten Anfahrzeitpunkt des weiteren Fahrzeugs (21) anzeigt,
- Bestimmen, ob sich das weitere Fahrzeug (21) direkt vor dem Fahrzeug (22) befindet,
- Empfangen einer Lichtzeichennachricht von einer Lichtzeichenanlage (20), und
- Bestimmen eines Parameters für die teilautomatisierte oder automatische Steuerung des Fahrzeugs (22) zumindest in Abhängigkeit von der von dem weiteren Fahrzeug (21) empfangenen Fahrintentionsnachricht, wenn bestimmt wurde, dass sich das weitere Fahrzeug (21) direkt vor dem Fahrzeug (22) befindet, und in Abhängigkeit von der von der Lichtzeichenanlage empfangenen Lichtzeichennachricht, welche umfasst:
- eine Zeitinformation über eine Lichtzeichenphase der Lichtzeichenanlage (20), und/oder
- eine Ortsinformation zu einem Standort der Lichtzeichenanlage (20), und/oder
- eine Topologieinformation einer Kreuzung.

2. Verfahren nach Anspruch 1, **dadurch gekennzeichnet, dass** die Fahrintentionsnachricht weiter umfasst:
- eine Positionsinformation einer aktuellen Position des weiteren Fahrzeugs (21),
- einen geplanten Startzeitpunkt zum Starten eines Antriebsmotors des weiteren Fahrzeugs (21),
- einen geplanten Beschleunigungsverlauf des weiteren Fahrzeugs (21),
- einen geplanten Geschwindigkeitsverlauf des weiteren Fahrzeugs (21), und/oder
- einen geplanten Ortsverlauf des weiteren Fahrzeugs (21).

3. Verfahren nach Anspruch 1 oder 2, **dadurch gekennzeichnet, dass** das Bestimmen, ob sich das weitere Fahrzeug (21) direkt vor dem Fahrzeug (22) befindet, umfasst:
- Bestimmen einer Fahrstreifeninformation, welche eine Belegung des Fahrstreifens vor dem Fahrzeug (22) anzeigt, und/oder
- Vergleichen einer aktuellen Position des Fahrzeugs (22) mit einer aktuellen Position des weiteren Fahrzeugs (21).

4. Verfahren nach einem der vorhergehenden Ansprüche, **dadurch gekennzeichnet, dass** das Verfahren ferner umfasst:
- Erzeugen einer weiteren Fahrintentionsnachricht in Abhängigkeit von zumindest dem Parameter für die teilautomatisierte oder automatische Steuerung, welche eine Information über einen geplanten Anfahrvorgang des Fahrzeugs (22) anzeigt, und
- Senden der weiteren Fahrintentionsnachricht über eine Fahrzeug-zu-Fahrzeug-Kommunikation.

5. Verfahren nach einem der vorhergehenden Ansprüche, **dadurch gekennzeichnet, dass** die Lichtzeichennachricht eine Information über eine nächste Grünphase der Lichtzeichenanlage (20) umfasst und das Verfahren ferner umfasst:
- Bestimmen, in Abhängigkeit von der empfangenen Fahrintentionsnachricht und der Lichtzeichennachricht, ob das Fahrzeug (22) die Lichtzeichenanlage (20) in der nächsten Grünphase passieren kann, und
- Bestimmen des Parameters für die teilautomatisierte oder automatische Steuerung des Fahrzeugs (22) in Abhängigkeit von zumindest der Bestimmung, ob das Fahrzeug (22) die Lichtzeichenanlage (20) in der nächsten Grünphase passieren kann.

6. Verfahren für eine teilautomatisierte oder automatische Steuerung eines Fahrzeugs beim Anfahren, umfassend:
- Erfassen einer Umgebungsinformation vor dem Fahrzeug (21), wobei das Erfassen der Umgebungsinformation ein Empfangen einer Lichtzeichennachricht von einer Lichtzeichenanlage (20) umfasst,
- Bestimmen eines Parameters für die teilautomatisierte oder automatische Steuerung des Fahrzeugs (21) beim Anfahren in Abhängigkeit von der erfassten Umgebungsinformation, wobei der Parameter für die teilautomatisierte oder automatische Steuerung des Fahrzeugs (21) in Abhängigkeit von zumindest der von der Lichtzeichenanlage (20) empfangenen Lichtzeichennachricht bestimmt wird,
- Erzeugen einer Fahrintentionsnachricht in Abhängigkeit von dem Parameter für die teilautomatisierte oder automatische Steuerung, welche eine Information über den geplanten Anfahrzeitpunkt des Fahrzeugs (21) anzeigt, und
- Senden der Fahrintentionsnachricht über eine Fahrzeug-zu-Fahrzeug-Kommunikation.

7. Verfahren nach Anspruch 6, **dadurch gekennzeichnet,**
**dass** das Erfassen der Umgebungsinformation ein Erfassen einer Verkehrssituation vor dem Fahrzeug (21) umfasst und dass der Parameter für die teilautomatisierte oder automatische Steuerung des Fahrzeugs (21) in Abhängigkeit von zumindest der erfassten Verkehrssituation bestimmt wird.

8. Vorrichtung zum Ansteuern einer teilautomatisierte oder automatischen Steuerung eines Fahrzeugs beim Anfahren, umfassend:
- einen Eingang (14) zum Empfangen einer Fahrintentionsnachricht von einem weiteren Fahrzeug (21), welche eine Information über einen geplanten Anfahrzeitpunkt des weiteren Fahrzeugs (21) anzeigt, und zum Empfangen einer Lichtzeichennachricht von einer Lichtzeichenanlage (20), und
- eine Verarbeitungsvorrichtung (15), um
zu bestimmen, ob sich das weitere Fahrzeug (21) direkt vor dem Fahrzeug (10, 22) befindet,
einen Parameter für die teilautomatisierte oder automatische Steuerung des Fahrzeugs (10, 22) in Abhängigkeit von der von dem weiteren Fahrzeug (21) empfangenen Fahrintentionsnachricht zu bestimmen und in Abhängigkeit von der von der Lichtzeichenanlage empfangenen Lichtzeichennachricht, welche umfasst:
- eine Zeitinformation über eine Lichtzeichenphase der Lichtzeichenanlage (20), und/oder
- eine Ortsinformation zu einem Standort der Lichtzeichenanlage (20), und/oder
- eine Topologieinformation einer Kreuzung, und,
wenn sie bestimmt hat, dass sich das weitere Fahrzeug (21) direkt vor dem Fahrzeug (10, 22) befindet, die teilautomatisierte oder automatische Steuerung (11) des Fahrzeugs (10, 22) mit dem Parameter anzusteuern.

9. Vorrichtung zum Ansteuern einer teilautomatisierte oder automatischen Steuerung eines Fahrzeugs beim Anfahren, umfassend:
- eine Erfassungsvorrichtung (12, 16) zum Erfassen einer Umgebungsinformation vor dem Fahrzeug (10, 22), wobei das Erfassen der Umgebungsinformation ein Empfangen einer Lichtzeichennachricht von einer Lichtzeichenanlage (20) umfasst, und
- eine Verarbeitungsvorrichtung (15), um
einen Parameter für die teilautomatisierte oder automatische Steuerung (11) des Fahrzeugs (10, 21) beim Anfahren in Abhängigkeit von der erfassten Umgebungsinformation zu bestimmen, wobei der Parameter für die teilautomatisierte oder automatische Steuerung des Fahrzeugs (21) in Abhängigkeit von zumindest der von der Lichtzeichenanlage (20) empfangenen Lichtzeichennachricht bestimmt wird,
eine Fahrintentionsnachricht, welche eine Information über den geplanten Anfahrzeitpunkt des Fahrzeugs (10, 21) anzeigt, zu erzeugen, und
die Fahrintentionsnachricht über eine Fahrzeug-zu-Fahrzeug-Kommunikation zu senden.

## Claims

1. Method for a semi-automated or automatic control of a vehicle during startup, comprising:
- receiving a driving intention message from another vehicle (21), which message displays information about a planned startup time of the other vehicle (21), determining whether the other vehicle (21) is located directly in front of the vehicle (22),
- receiving a traffic signal message from a traffic signal system (20), and
- determining a parameter for the semi-automated or automatic control of the vehicle (22) at least on the basis of the driving intention message received by the other vehicle (21) if it has been determined that the other vehicle (21) is located directly in front of the vehicle (22), and on the basis of the traffic signal message received by the traffic signal system, which message comprises:
- time information about a traffic signal phase of the traffic signal system (20), and/or - location information relating to a location of the traffic signal system (20), and/or
- topology information relating to an intersection.

2. Method according to claim 1, **characterized in that** the driving intention message further comprises:
- position information relating to a current position of the other vehicle (21),
- a planned starting time for starting a drive motor of the other vehicle (21),
- a planned acceleration profile of the other vehicle (21),
- a planned speed profile of the other vehicle (21), and/or
- a planned location profile of the other vehicle (21).

3. Method according to either claim 1 or claim 2, **characterized in that** determining whether the other vehicle (21) is located directly in front of the vehicle (22) comprises:
- determining traffic lane information which displays occupancy of the traffic lane in front of the vehicle (22), and/or
- comparing a current position of the vehicle (22) to a current position of the other vehicle (21).

4. Method according to any of the preceding claims, **characterized in that** the method furthermore comprises:
- generating another driving intention message on the basis of at least the parameter for the semi-automated or automatic control, which message displays information about a planned startup process of the vehicle (22), and
- transmitting the other driving intention message via vehicle-to-vehicle communication.

5. Method according to any of the preceding claims, **characterized in that** the traffic signal message comprises information about a next green phase of the traffic signal system (20), and the method further comprises:
- determining, on the basis of the received driving intention message and the traffic signal message, whether the vehicle (22) can pass the traffic signal system (20) in the next green phase, and
- determining the parameter for the semi-automated or automatic control of the vehicle (22) on the basis of at least determining whether the vehicle (22) can pass the traffic signal system (20) in the next green phase.

6. Method for a semi-automated or automatic control of a vehicle during startup, comprising:
- detecting environment information in front of the vehicle (21), wherein detecting the environment information comprises receiving a traffic signal message from a traffic signal system (20),
- determining a parameter for the semi-automated or automatic control of the vehicle (21) during startup on the basis of the detected environment information, wherein the parameter for the semi-automated or automatic control of the vehicle (21) is determined on the basis of at least the traffic signal messages received by the traffic signal system (20),
- generating a driving intention message on the basis of the parameter for the semi-automated or automatic control, which message displays information about the planned startup time of the vehicle (21), and
- transmitting the driving intention message via vehicle-to-vehicle communication.

7. Method according to claim 6, **characterized in**
**that** detecting the environment information comprises detecting a traffic situation in front of the vehicle (21) and in that the parameter for the semi-automated or automatic control of the vehicle (21) is determined on the basis of at least the detected traffic situation.

8. Device for actuating a semi-automated or automatic control of a vehicle during startup, comprising:
- an input (14) for receiving a driving intention message from another vehicle (21), which message displays information about a planned startup time of the other vehicle (21), and for receiving a traffic signal message from a traffic signal system (20), and
- a processing device (15) to determine whether the other vehicle (21) is located directly in front of the vehicle (10, 22), to determine a parameter for the semi-automated or automatic control of the vehicle (10, 22) on the basis of the driving intention message received by the other vehicle (21) and on the basis of the traffic signal message received by the traffic signal system, which comprises:
- time information about a traffic signal phase of the traffic signal system (20), and/or - location information relating to a location of the traffic signal system (20), and/or
- topology information relating to an intersection, and,
if it has determined that the other vehicle (21) is located directly in front of the vehicle (10, 22), to actuate the semi-automated or automatic control (11) of the vehicle (10, 22) with the parameter.

9. Device for actuating a semi-automated or automatic control of a vehicle during startup, comprising:
- a detection device (12, 16) for detecting environment information in front of the vehicle (10, 22), wherein detecting the environment information comprises receiving a traffic signal message from a traffic signal system (20), and
- a processing device (15) to
determine a parameter for the semi-automated or automatic control (11) of the vehicle (10, 21) during startup on the basis of the detected environment information, wherein the parameter for the semi-automated or automatic control of the vehicle (21) is determined on the basis of at least the traffic signal message received by the traffic signal system (20),
generate a driving intention message which displays information about the planned startup time of the vehicle (10, 21), and
transmit the driving intention message via vehicle-to-vehicle communication.

## Revendications

1. Procédé destiné à une commande partiellement automatisée ou automatique d'un véhicule au démarrage, comprenant :
- la réception d'un message d'intention de conduite en provenance d'un autre véhicule (21) indiquant des informations concernant un temps de démarrage prévu de l'autre véhicule (21),
- la détermination du fait de savoir si l'autre véhicule (21) se situe directement devant le véhicule (22),
- la réception d'un message de signalisation lumineuse en provenance d'un système de signalisation lumineuse (20), et
- la détermination d'un paramètre pour la commande partiellement automatisée ou automatique du véhicule (22) au moins en fonction du message d'intention de conduite reçu en provenance de l'autre véhicule (21) lorsqu'il a été déterminé que l'autre véhicule (21) se trouve directement devant le véhicule (22), et en fonction du message de signalisation lumineuse reçu en provenance du système de signalisation lumineuse, lequel message de signalisation lumineuse comprend :
- des informations de temps concernant une phase de signalisation lumineuse du système de signalisation lumineuse (20), et/ou
- des informations d'emplacement concernant un emplacement du système de signalisation lumineuse (20), et/ou
- des informations de topologie d'une intersection.

2. Procédé selon la revendication 1, **caractérisé en ce que** le message d'intention de conduite comprend en outre :
- des informations de position d'une position réelle de l'autre véhicule (21),
- un temps de mise en marche prévu pour la mise en marche d'un moteur d'entraînement de l'autre véhicule (21),
- une courbe d'accélération prévue de l'autre véhicule (21),
- une courbe de vitesse prévue de l'autre véhicule (21), et/ou
- une courbe d'emplacement prévue de l'autre véhicule (21).

3. Procédé selon la revendication 1 ou 2, **caractérisé en ce que** la détermination du fait de savoir si l'autre véhicule (21) se trouve directement devant le véhicule (22) comprend :
- la détermination d'informations de voie de circulation indiquant une occupation de la voie de circulation devant le véhicule (22), et/ou
- la comparaison d'une position réelle du véhicule (22) avec une position réelle de l'autre véhicule (21).

4. Procédé selon l'une des revendications précédentes, **caractérisé en ce que** le procédé comprend en outre :
- la génération d'un autre message d'intention de conduite en fonction d'au moins le paramètre pour la commande partiellement automatisée ou automatique, lequel message indique des informations concernant un processus de démarrage prévu du véhicule (22), et
- l'envoi de l'autre message d'intention de conduite par l'intermédiaire d'une communication de véhicule à véhicule.

5. Procédé selon l'une des revendications précédentes, **caractérisé en ce que** le message de signalisation lumineuse comprend des informations concernant une phase verte suivante du système de signalisation lumineuse (20) et le procédé comprend en outre :
- la détermination, en fonction du message d'intention de conduite reçu et du message de signal lumineux, du fait de savoir si le véhicule (22) peut passer au-delà du système de signal lumineux (20) à la phase verte suivante, et
- la détermination du paramètre pour la commande partiellement automatisée ou automatique du véhicule (22) en fonction d'au moins la détermination du fait de savoir si le véhicule (22) peut passer au-delà du système de signalisation lumineuse (20) à la phase verte suivante.

6. Procédé destiné à une commande partiellement automatisée ou automatique d'un véhicule au démarrage, comprenant :
- la détection d'informations d'environnement devant le véhicule (21), dans lequel la détection des informations d'environnement comprend une réception d'un message de signalisation lumineuse en provenance d'un système de signalisation lumineuse (20),
- la détermination d'un paramètre pour la commande partiellement automatisée ou automatique du véhicule (21) au démarrage en fonction des informations d'environnement détectées, dans lequel le paramètre pour la commande partiellement automatisée ou automatique du véhicule (21) est déterminé en fonction d'au moins le message de signalisation lumineuse reçu en provenance du système de signalisation lumineuse (20),
- la génération d'un message d'intention de conduite, en fonction du paramètre pour la commande partiellement automatisée ou automatique, indiquant des informations concernant le temps de démarrage prévu du véhicule (21), et
- l'envoi du message d'intention de conduite par l'intermédiaire d'une communication de véhicule à véhicule.

7. Procédé selon la revendication 6,
**caractérisé en ce que** la détection des informations d'environnement comprend une détection d'une situation de trafic devant le véhicule (21), **et en ce que** le paramètre pour la commande partiellement automatisée ou automatique du véhicule (21) est déterminé en fonction d'au moins la situation de trafic détectée.

8. Dispositif permettant la commande d'une commande partiellement automatisée ou automatique d'un véhicule au démarrage, comprenant :
- une entrée (14) permettant de recevoir un message d'intention de conduite en provenance d'un autre véhicule (21), lequel message indique des informations concernant un temps de démarrage prévu de l'autre véhicule (21), et permettant de recevoir un message de signalisation lumineuse en provenance d'un système de signalisation lumineuse (20), et
- un dispositif de traitement (15) pour déterminer si l'autre véhicule (21) se situe directement devant le véhicule (10, 22), pour déterminer un paramètre pour la commande partiellement automatisée ou automatique du véhicule (10, 22) en fonction du message d'intention de conduite reçu en provenance de l'autre véhicule (21) et en fonction du message de signalisation lumineuse reçu en provenance du système de signalisation lumineuse, lequel message de signalisation lumineuse comprend :
- des informations de temps concernant une phase de signalisation lumineuse du système de signalisation lumineuse (20), et/ou
- des informations d'emplacement concernant un emplacement du système de signalisation lumineuse (20), et/ou
- des informations de topologie d'une intersection, et,
lorsqu'il a déterminé que l'autre véhicule (21) se trouve directement devant le véhicule (10, 22), pour commander la commande partiellement automatisée ou automatique (11) du véhicule (10, 22) avec le paramètre.

9. Dispositif permettant la commande d'une commande partiellement automatisée ou automatique d'un véhicule au démarrage, comprenant :
- un dispositif de détection (12, 16) permettant de détecter des informations d'environnement devant le véhicule (10, 22), dans lequel la détection des informations d'environnement comprend une réception d'un message de signalisation lumineuse en provenance d'un système de signalisation lumineuse (20), et
- un dispositif de traitement (15) pour
déterminer un paramètre pour la commande partiellement automatisée ou automatique (11) du véhicule (10, 21) au démarrage en fonction des informations d'environnement détectées, dans lequel le paramètre pour la commande partiellement automatisée ou automatique du véhicule (21) est déterminé en fonction d'au moins le message de signalisation lumineuse reçu en provenance du système de signalisation lumineuse (20),
générer un message d'intention de conduite indiquant des informations concernant le temps de démarrage prévu du véhicule (10, 21), et
envoyer le message d'intention de conduite par l'intermédiaire d'une communication de véhicule à véhicule.
